# EUROPÄISCHE PATENTSCHRIFT

(11) **EP 1 390 316 B1**
(45) Veröffentlichungstag und Bekanntmachung des Hinweises auf die Patenterteilung: **08.08.2007**
(21) Anmeldenummer: 02719716.9
(22) Anmeldetag: 23.01.2002
(51) Int. Cl.: C04B 7/44, F23N 3/00

(54) **ANLAGE UND VERFAHREN ZUR HERSTELLUNG VON ZEMENTKLINKER**
PLANT AND METHOD FOR THE PRODUCTION OF CEMENT CLINKER
INSTALLATION ET PROCEDE DE PRODUCTION DE CLINKER DE CIMENT

(30) Priorität: 04.05.2001 DE 10121773
(43) Veröffentlichungstag der Anmeldung: 25.02.2004
(73) Patentinhaber: Polysius AG, 59269 Beckum (DE)
(72) Erfinder: BRENTRUP, Ludger, 59302 Oelde (DE); SCHMIDTHALS, Holger, 59269 Beckum (DE)
(74) Vertreter: Tetzner, Michael
(86) Internationale Anmeldenummer: PCT/EP2002/000658
(87) Internationale Veröffentlichungsnummer: WO 2002/090283

(56) Entgegenhaltungen:
- EP-A- 0 582 394
- EP-A- 1 052 231
- US-A- 4 110 121

## Beschreibung

Die Erfindung betrifft eine Anlage (entsprechend dem Oberbegriff des Anspruches 1) sowie ein Verfahren (entsprechend dem Oberbegriff des Anspruches 17) zur Herstellung von Zementklinker aus Zementrohmaterial.

Eine Anlage und ein Verfahren der vorausgesetzten Art sind beispielsweise aus der EP 764 614 B1 bekannt. Bei dieser bekannten Ausführung ist der Vergasungsreaktor mit seinem unteren Ende unmittelbar an eine zur Calcinierzone führende bzw. diese enthaltende Abgasleitung angebunden, so dass zum einen das im Reaktor erzeugte Produktgas als Brenngas bzw. Brennstoff in die Calcinierzone eingeleitet und zum andern die nicht vollständig vergasten Reststoffe der im Reaktor vergasten bzw. entgasten Abfallbrennstoffe über die Ofenabgasleitung in den Ofeneinlauf abgeschoben werden. Im Vergasungsreaktor werden die stückigen Abfallbrennstoffe, insbesondere Altreifen, mit Tertiärluft aus dem Klinkerkühler vergast.

Die EP-A-1 052 231 offenbart eine Anlage zur thermischen Behandlung von mehlförmigen Rohmaterialien, bei der in einer weiteren zum Drehofenabgaskanal führenden Teriärluftleitung grobstückige Sekundärbrennstoffe durch Pyrolyse oder ggf. Verbrennung entsorgt werden können.

Aus der EP-A-0 582 394 und der US 4,110,121 sind Zementanlagen mit einem zusätzlichen Vergasungs- bzw. Pyrolysereaktor zur Erzeugung von Brenngas aus Abfallstoffen bekannt.

Der Erfindung liegt die Aufgabe zugrunde, eine Anlage gemäß dem Oberbegriff des Anspruches 1 sowie ein Verfahren nach dem Oberbegriff des Anspruches 17 dahin weiter zu verbessern, dass gegenüber der oben beschriebenen bekannten Ausführung vor allem die Umsatzgeschwindigkeiten der stückigen Abfallbrennstoffe bzw. Sekundärbrennstoffe, d.h. der Vergasungsablauf dieser Abfallbrennstoffe bei möglichst günstigen baulichen Abmessungen des Reaktors deutlich erhöht werden und das erzeugte Produktgas an verschiedenen Stellen des Zementherstellungsprozesses als Brennstoff eingesetzt werden kann.

Diese Aufgabe wird erfindungsgemäß zum einen - in bezug auf die Anlage - durch die kennzeichnenden Merkmale des Anspruches 1 und zum andern - in bezug auf das Herstellungsverfahren - durch das Kennzeichen des Anspruches 17 gelöst.

Vorteilhafte Ausgestaltungen und Weiterbildungen der Erfindung sind Gegenstand der Unteransprüche.

Ein erster wesentlicher Gedanke der vorliegenden Erfindung wird darin gesehen, daß im Vergasungsreaktor im Bereich oberhalb eines Feststoffbettes aus den Abfallbrennstoffen eine sich über den Reaktorquerschnitt erstreckende Reaktionsmittel-Einführzone ausgebildet ist, in die über den Reaktorumfang gleichmäßig verteilte Reaktionsmittel-Einführstutzen derart einmünden, daß im Bereich der Einführzone das Reaktionsmittel unter Ausbildung einer vorgewählten Strömungsform mit hohem Impuls einführbar ist. Durch das auf diese Weise etwain Form von Teilströmen mit hohem Eintrittsimpuls in den Vergasungsreaktor eingeführte Vergasungsmittel bzw. Reaktionsmittel prägt sich im Bereich der genannten Einführzone über dem Feststoffbett aus den Abfallstoffen eine derart günstige Strömungsform (bzw. Strömungsbild) aus, daß die Vergasungsreaktion weitgehend oberflächenbestimmt abläuft, was durch eine optimale Einstellung der genannten Strömungsform (mit der Ausbildung eines entsprechenden Strömungs- und Temperaturfeldes) zu einem besonders hohen Vergasungswirkungsgrad führt. Damit können besonders hohe Umsatzgeschwindigkeiten der stückigen Abfallbrennstoffe zur Erzeugung von als Brenngas bzw. Brennstoff zu verwertendem Produktgas herbeigeführt werden. Dieser optimale Vergasungsablauf im Vergasungsreaktor bringt auch den weiteren Vorteil mit sich, daß die baulichen Abmessungen des hier verwendeten Reaktors verhältnismäßig niedrig gehalten werden können.

Bei dieser erfindungsgemäßen Ausführung ist ferner in besonders vorteilhafter Weise der Brenngasleitung wenigstens eine Gasfördereinrichtung für die Zuführung des im Vergasungsreaktor erzeugten Brenngases (Produktgases) in wenigstens eine Brennzone zugeordnet.In diesem Zusammenhang sei bereits darauf hingewiesen, daß diese erfindungsgemäße Anlage (und auch das erfindungsgemäße Verfahren, auf das später noch eingegangen wird) generell so ausgeführt sein kann, daß die Calcinierzone - wie an sich bekannt - entweder als gesondert ausgebildete Einrichtung (Calcinator) im Bereich zwischen Vorwärmzone bzw. Vorwärmer und Brennofen-Einlauf angeordnet oder in einem ersten Längsabschnitt des als Drehrohrofen ausgeführten Brennofens ausgebildet sein kann, so daß im ersten Falle (gesondert ausgebildete Calciniereinrichtung) die Calcinierzone auch gleichzeitig eine weitere Brennzone bildet und mit Brennstoff versorgt wird, und zwar über eine gesonderte Brenngasleitung bzw. Brenngas-Teilleitung, während die im Brennofen enthaltene Sinterbrennzone gesondert über ihren Brenner bzw. Hauptbrenner mit Brennstoff versorgt wird; dagegen enthält die Anlage nur eine einzige Brennzone, nämlich die zuvor genannte Sinterbrennzone, wenn im ersten Längsabschnitt des Brennofens (Drehrohrofens) die Calcinierzone ausgebildet ist. Das optimal erzeugte Brenngas kann somit in verschiedenen Brennzonen (Brennstellen) als Brennstoff eingesetzt werden.

Gemäß einer vorteilhaften Ausgestaltung der erfindungsgemäßen Anlage münden die Reaktionsmittel-Einführstutzen im wesentlichen alle in derselben Horizontalebene in die Reaktionsmittel-Einführzone ein, wobei zur Ausbildung der vorbestimmten Strömungsform in der Einführzone die Mittelachse jedes Einführstutzens unter einem spitzen Winkel von einer zum Zentrum des Reaktorquerschnitts gerichteten (radialen) Bezugslinie und/oder von der genannten Horizontalebene nach unten abweichen. In der Reaktionsmittel-Einführzone wird somit über dem Feststoffbett aus Abfallbrennstoffen dem eingeführten Reaktionsmittel eine gewünschte Rotationsströmung aufgeprägt, die den Stoff- bzw. Wärmeübergang zwischen dem Reaktionsmittel und den Abfallbrennstoffen positiv beeinflußt.

Bei dieser erfindungsgemäßen Ausbildung ist es ferner von Vorteil, wenn die durch die Mündungsöffnungen der Reaktionsmittel-Einführstutzen definierte Horizontalebene im Vergasungsreaktor einen vorbestimmten lichten Höhenabstand von der Oberseite des Feststoffbettes aufweist, wobei es zweckmäßig ist, wenn - beispielsweise in Abhängigkeit von der jeweiligen Beschaffenheit bzw. Art der Abfallbrennstoffe - dieser Höhenabstand in zweckmäßigen Bereichen einstellbar bzw. regulierbar ist.

Gemäß einer weiteren vorteilhaften Ausgestaltung der Erfindung ist es vorteilhaft, wenn in der Gaszuführleitung zum Vergasungsreaktor und in der Brenngasleitung als Gasfördereinrichtungen Ventilatoren und/oder mittels Druckluft oder Dampf betriebene Injektoren vorgesehen sind. Auf diese Weise kann zum einen der Strömungsimpuls, mit dem das Reaktionsmittel in den Vergasungsreaktor eingeführt, vorzugsweise eingeblasen wird, und zum andern die Zuführung des erzeugten Brenngases zu wenigstens einer Brennstelle (in der Calcinierzone und/oder Sinterbrennzone) optimal gesteuert werden.

Das erfindungsgemäße Verfahren zur Herstellung von Zementklinker ist vor allem dadurch gekennzeichnet, daß in den Vergasungsreaktor oberhalb eines Feststoffbettes aus den Abfallbrennstoffen das heiße, gasförmige Reaktionsmittel an mehreren über den Reaktorumfang verteilten Zuführstellen unter Ausbildung einer sich über den Reaktorquerschnitt erstreckenden Reaktionsmittel-Einführzone mit hohem Impuls und mit einer vorgewählten Strömungsform (Strömungsbild) eingeführt und das im Vergasungsreaktor erzeugte Brenngas als Brennstoff der - wenigstens einen - Brennzone zugeführt wird.

Bei diesem erfindungsgemäßen Verfahren ist es ferner besonders zweckmäßig, wenn die Brenngaserzeugung im Vergasungsreaktor unter reduzierenden Bedingungen durchgeführt und der Reaktor dabei mit einem Unterdruck von wenigstens 0,1 mbar betrieben wird. Hierdurch wird vermieden, daß erzeugtes Brenngas - außer durch die Brenngasleitung/-leitungen - in unerwünschter Weise aus dem Vergasungsreaktor austritt.

Diese und weitere Einzelheiten der Erfindung werden nachfolgend anhand der Zeichnung näher erläutert. In dieser weitgehend schematisch gehaltenen Zeichnung zeigen
- Fig.1: ein vereinfachtes Schema eines Ausführungsbeispieles der erfindungsgemäßen (Gesamt-) Anlage;
- Fig.2: eine teilweise Vertikal-Schnittansicht durch einen erfindungsgemäß verwendeten Vergasungsreaktor;
- Fig.3: eine Querschnittsansicht durch diesen Vergasungsreaktor, etwa entsprechend der Schnittlinie III-III in Fig.2 (bei einem etwa kreisförmigen Reaktorquerschnitt);
- Fig.4, 5 und 6: Querschnittsansichten von weiteren möglichen Querschnittsformen des Vergasungsreaktors.

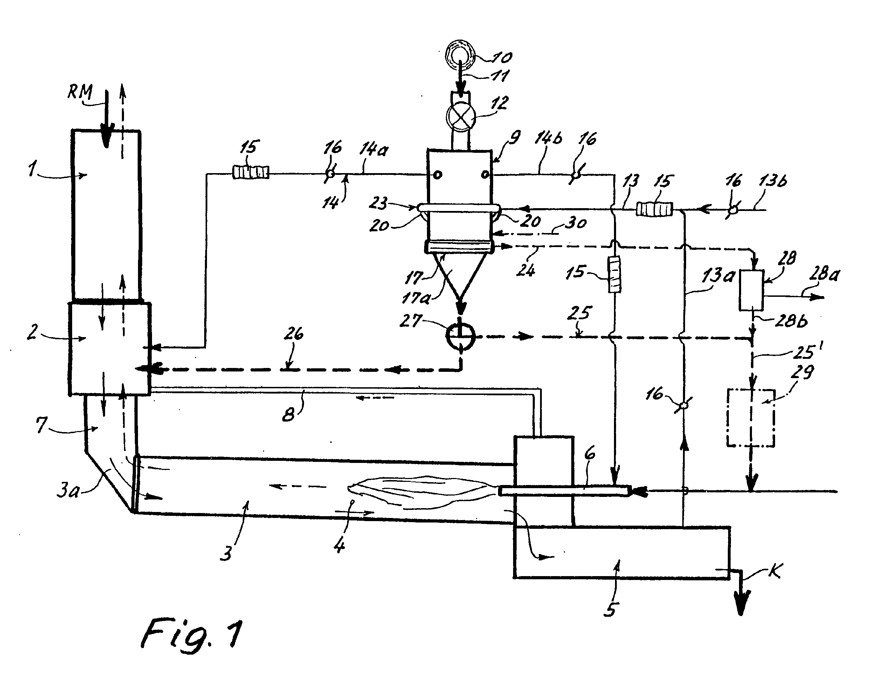

Die erfindungsgemäße Anlage zur Herstellung von Zementklinker kann zu einem großen Teil in an sich bekannter Weise ausgeführt sein. Bei dem Ausführungsbeispiel im Schema gemäß Fig.1 enthält die Anlage zunächst in etwa üblicher Ausführung einen eine Vorwärmzone bildenden Vorwärmer 1, insbesondere einen Schwebegasvorwärmer, einen in Fließrichtung des Zementrohmateriales RM dem Vorwärmer 1 nachgeordneten, gesondert ausgebildeten Calcinator 2 als Calcinierzone, einen Drehrohrofen 3 als Brennofen, in dem zumindest eine Sinterbrennzone 4 ausgebildet ist, sowie einen dem Drehrohrofen 3 unmittelbar nachgeordneten Klinkerkühler 5 als Kühlzone.

Diese für den eigentlichen Klinkerbrennprozeß vorgesehenen Anlagenteile können in jeder geeigneten, herkömmlichen Weise ausgebildet sein und miteinander in Verbindung stehen. Dabei bilden der Vorwärmer 1 und der Calcinator (Calcinierzone) eine Vorbehandlungsstufe, wobei das zu Zementklinker zu brennende Zementrohmaterial (Pfeil RM) am oberen Ende des Vorwärmers 1 aufgegeben und das vorgewärmte Zementrohmaterial im Calcinator 2 unter Zugabe von Brennstoff und Verbrennungsluft weitgehend vorcalciniert wird, wie an sich bekannt ist. Das so vorcalcinierte Material wird dann (entsprechend den durchgehend eingezeichneten Pfeilen) über einen Ofeneinlauf (Ofeneinlaufende) 3a des Drehrohrofens 3 in letzteren eingeleitet, in dessen Sinterbrennstufe 4 es zu Zementklinker fertiggebrannt wird, wozu dieser Drehrohrofen 4 über seinen Hauptbrenner 6 ebenfalls mit Brennstoff versorgt wird. Der fertiggebrannte Zementklinker (Pfeil K) wird danach im Klinkerkühler 5 unter Zuführung von Kühlgas, insbesondere Kühlluft abgekühlt und aus diesem Kühler abgeführt.

Der Drehrohrofen 3 ist über seinen Ofeneinlauf 3a und eine daran anschließende Ofenabgasleitung 7 mit dem Calcinator 2 verbunden, während der Klinkerkühler 5 über eine Tertiärluftleitung 8 mit dem Calcinator 2 derart in Verbindung steht, daß vorgewärmte Kühlerabluft als Verbrennungsluft in den Calcinator 2 bzw. in die dadurch gebildete Calcinierzone eingeleitet wird.

Es sei in diesem Zusammenhang noch ergänzt, daß in an sich bekannter und daher nicht im einzelnen zu erläuternder Weise aus dem Drehrohrofen 3 bzw. aus seiner Sinterbrennzone 4 abströmendes Ofenabgas über die Ofenabgasleitung 7, den Calcinator 2 durch den Vorwärmer 1 (entsprechend den gestrichelt angedeuteten Pfeilen) abgeleitet wird.

Zu dieser Anlage zur Herstellung von Zementklinker gehört ferner ein Vergasungsreaktor 9 zur Erzeugung von Brenngas aus stückigen Abfallbrennstoffen, bei denen es sich vor allem um grobstückige Abfallstoffe, insbesondere ganzen oder grob zerkleinerten Altreifen, ggf. aber auch um andere grob zerkleinerte Abfallbrennstoffe wie Holz und dergleichen, handeln kann. In Fig. 1 sei angenommen, daß - wie bevorzugt - Altreifen 10 entsprechend Pfeil 11 über eine geeignete Aufgabeschleuse 12, insbesondere eine luftdichte Rotationsschleuse oder Pendelklappenschleuse, aufgegeben wird. An diesen Vergasungsreaktor 9 ist einerseits wenigstens eine Gaszuführleitung 13 zum Zuführen eines heißen, gasförmigen Reaktionsmittels bzw. Vergasungsmittels angeschlossen, während der Vergasungsreaktor 9 andererseits über wenigstens eine Brenngasleitung 14 mit den in diesem Ausführungsbeispiel vorgesehenen zwei Brennzonen (2, 4) verbunden ist, d.h. die Brenngasleitung 14 wird hier durch zwei Brenngasleitungen bzw. - besser ausgedrückt - zwei Brenngas-Teilleitungen 14a und 14b gebildet, von denen die eine Teilleitung 14a an den Calcinator (Calcinierzone) 2 (als eine Brennzone) und die andere Teilleitung 14b an den Hauptbrenner 6 der im Drehrohrofen 3 ausgebildeten Sinterbrennzone 4 (als zweite Brennzone) angeschlossen ist. Auf diese Weise kann diesen beiden Brennstellen bzw. Brennzonen (2, 4) in der jeweils erforderlichen Weise, d.h. anteilig oder wahlweise, im Reaktor 9 erzeugtes Brenngas als Brennstoff zugeführt werden. Es sei an dieser Stelle auch erwähnt, daß anstelle der beiden einzelnen vom Vergasungsreaktor 9 abgehenden Brenngasleitungen 14a und 14b selbstverständlich auch eine einzige Brenngasleitung abgehen kann, die dann in geeigneter Weise in zwei oder mehr entsprechende Zweigleitungen verzweigt sein könnte.

In jeder dieser Brenngasleitungen 14a, 14b ist wenigstens eine Gasfördereinrichtung angeordnet, die jeweils durch einen geeigneten Ventilator oder einen mittels Drucklgas (z.B. Druckluft) oder Dampf betriebenen Injektor gebildet sein kann, um das erzeugte Brenngas in der erforderlichen Weise (Druck und Geschwindigkeit) in die zugehörige Brennzone einführen zu können; im Anlagenbeispiel gemäß Fig. 1 sind Injektoren 15 angedeutet.

Des weiteren sind in den Brennstoffleitungen 14a, 14b Mittel zum Messen und Regeln der Brenngasmenge vorgesehen, die bei 16 angedeutet und in geeigneter Weise - beispielsweise über eine zentrale Schalt- und Steuereinrichtung - einzeln so steuerbar sind, daß erzeugtes Brenngas aus dem Vergasungsreaktor 9 entweder nur dem Calcinator 2 oder nur dem Hauptbrenner 6 der Sinterbrennzone 4 oder in einstellbaren Anteilen teilweise dem Calcinator 2 und teilweise der Sinterbrennzone 4 zugefördert werden kann.

Die an den Vergasungsreaktor 9 herangeführte Gaszuführleitung 13 kann eine reine Frischluftleitung zum Zuführen von Frischluft oder eine Kühlerabluftleitung zum Zuführen von heißer Kühlerabluft oder - wie in Fig. 1 angedeutet - eine Kombination der zuvor genannten Leitungsarten sein, d.h. gemäß Fig.1 kann über eine erste Teilleitung 13a heiße Abluft vom Klinkerkühler 5 und über eine zweite Teilleitung 13b Frischluft in den Vergasungsreaktor 9 eingeführt werden. Zweckmäßig ist auch in diesem Falle in die Gaszuführleitung 13 eine geeignete Gasfördereinrichtung 15 eingeschaltet, bei der es sich wiederum um einen geeigneten Ventilator oder um einen mittels Druckgas oder Dampf betriebenen Injektor (ähnlich wie bei den Brenngasleitungen) handeln kann; und auch hier sind geeignete Mittel 16 zum Messen und Regeln der Gasmengen in den Teilleitungen 13a und 13b angeordnet.

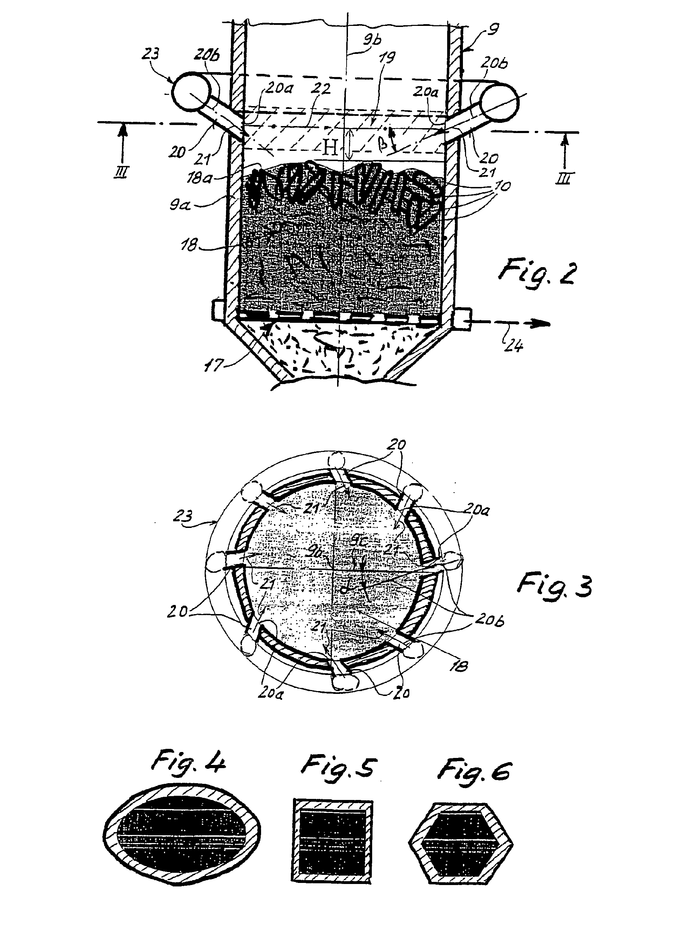

Der Vergasungsreaktor 9 ist - wie auch die Darstellungen in den Fig.2 und 3 erkennen lassen - in Form eines im wesentlichen vertikalen Reaktions- bzw. Vergasungsschachtes ausgebildet, der mit der bereits erwähnten oberen Aufgabeschleuse 12 für den Abfallbrennstoff 10 sowie mit einer im Bodenbereich vorgesehenen Austragsvorrichtung 17 für nicht vollständig vergaste Reststoffe versehen ist. Gemäß der Darstellung in den Fig.2 und 3 ist der Schacht 9a des Vergasungsreaktors 9 mit einem runden, und zwar hier kreisförmigen Querschnitt ausgebildet.

Es sei an dieser Stelle auch darauf hingewiesen, daß der Schacht 9a des Vergasungsreaktors 9 jede andere geeignete Querschnittsform aufweisen kann. Beispiele dafür zeigen in vereinfachter Querschnittsform die Fig.4, 5 und 6, d.h. Fig.4 zeigt eine etwa elliptische Querschnittsform, Fig.5 eine etwa quadratische Querschnittsform und Fig.6 eine polygonale (hier sechsekkige) Querschnittsform des Reaktorschachtes 9a.

Von besonderer Bedeutung ist bei dieser erfindungsgemäßen Ausführung auch die Zuführung bzw. Einführung des gasförmigen Reaktionsmittels (Vergasungsmittels) von der Gaszuführleitung 13 in den Reaktorschacht 9a. Dazu sei neben der Darstellung in Fig.1 vor allem auf die Darstellungen in den Fig.2 und 3 hingewiesen.

In Fig.2 ist zu erkennen, daß im Vergasungsreaktor 9 bzw. in dessen Reaktorschacht 9a ein Feststoffbett 18 aus den Abfallbrennstoffen 10 (hier also bevorzugt aus den Altreifen 10) ausgebildet ist, das sich über eine entsprechende Höhe im Reaktorschacht 9a erstreckt. Oberhalb dieses Feststoffbettes 18 bzw. oberhalb der - in Abhängigkeit von der Art der Abfallbrennstoffe/Altreifen 10 abhängigen, mehr oder weniger unregelmäßigen - Oberseite 18a dieses Feststoffbettes 18 ist ferner eine sich über den ganzen Reaktorquerschnitt erstreckende Reaktionsmittel-Einblaszone bzw. -Einführzone 19 ausgebildet, in die über den Reaktorumfang gleichmäßig verteilte Reaktionsmittel-Einblas- bzw. Einführstutzen 20 derart einmünden, daß im Bereich der Einführzone 19 das gasförmige Reaktionsmittel (Pfeil 21) unter Ausbildung einer vorgewählten Strömungsform mit hohem Impuls einführbar ist.

Wie in Fig.2 zu erkennen ist, münden die Reaktionsmittel-Einführstutzen 20 im wesentlichen alle in derselben Horizontalebene 22 in die Reaktionsmittel-Einführzone 19 ein, d.h. diese Horizontalebene 22 wird im wesentlichen durch die Mündungsöffnungen 20a, und noch genauer - wie in Fig.2 zu erkennen - durch die Mitten dieser Mündungsöffnungen 20a definiert, wobei diese Mitten wiederum durch die Mittelachsen 20b der Einführstutzen 20 bestimmt sind. Im Bereich oberhalb und unterhalb dieser Horizontalebene 22 ist dementsprechend die mehr oder weniger dicke Reaktionsmittel-Einführzone 19 ausgebildet.

Um die gewünschte bzw. vorgewählte Strömungsform des eingeführten Reaktionsmittels in der Einführzone 19 ausbilden zu können, sind die Reaktionsmittel-Einführstutzen 20 mit einer bestimmten Ausrichtung an den Schacht 9a des Vergasungsmittelreaktors 9 angeschlossen: Die Mittelachse 20b jedes Einführstutzens 20 weicht jeweils unter einem spitzen Winkel von einer zum Zentrum 9b des Reaktorquerschnittes gerichteten - hier radialen - Bezugslinie 9c (vgl. Winkel α in Fig.3) und - in diesem Ausführungsbeispiel - gleichzeitig auch von der Horizontalebene 22 (Winkel β in Fig.2) nach unten ab. Hierdurch ergibt sich eine besonders ausgeprägte Strömungsform bzw. ein besonders ausgeprägtes Strömungsbild mit einer ausgeprägten Rotationsströmung im Bereich der Reaktionsmittel-Einführzone 19. Der gewünschte hohe Impuls, mit dem das Reaktionsmittel (Pfeile 21) in den Reaktorschacht 9a bzw. in die darin ausgebildete Einführzone 19 eingeführt wird, kann insbesondere über die Gasfördereinrichtung (z.B. Injektoren 15) sowie die Meß- und Regelmittel 16 in den Gasleitungen 13a, 13b gesteuert werden. Hierbei ist es ferner besonders zweckmäßig, wenn - wie in Fig.2 angedeutet - die Horizontalebene 22 im Vergasungsreaktor 9 einen vorbestimmten Höhenabstand H von der Oberseite 18a des Feststoffbettes 18 aufweist.

Wie bereits weiter oben angedeutet worden ist, wird im veranschaulichten Ausführungsbeispiel (Fig.1) die Gaszuführleitung 13 (für das Reaktionsmittel) durch eine Art Kombination aus einer sauerstoffhaltige Kühlerabluft (Tertiärluft) führende, als Kühlerabluft- bzw. Tertiärluftleitung ausgebildete erste Teilleitung 13a und eine sauerstoffhaltige Luft (Frischluft) führende Frischluftleitung, nämlich die zweite Teilleitung 13b gebildet.

Bei dieser Art und Zuführung des Reaktionsmittels in den Vergasungsreaktor 9 ergibt sich im wesentlichen folgende räumliche Beziehung von Feststoffbett (hier: Reifenbett) 18 und Reaktionsmittelzuführung im Bereich der Einführzone 19: Das gasförmige Reaktionsmittel strömt - entsprechend den Pfeilen 21 - mit hohem Impuls in den Reaktorschacht 9a, d.h. es strömt in Form von Teilströmen (Pfeile 21) in die Reaktionsmittel-Einführzone 19 ein und prägt darin - also oberhalb der Feststoffbett-Oberseite 18a - die vorgewählte Strömungsform (Strömungsbild) aus. Hierdurch erfolgt eine überwiegend oberflächenbestimmte Reaktion mit dem Abfallbrennstoff (Altreifen) im Feststoffbett 18. Der Gesamtumsatzgrad, d.h. die Art und Weise wie schnell und effektiv die Vergasung des Brennstoffes abläuft, hängt folglich erheblich von den an der Oberfläche bzw. Oberseite 18a des Feststoffbettes 18 erzielten Wärme- und Stoffübergangskoeffizienten ab. Die Homogenität der Strömungs-und Wärmeverteilung im Bereich der Feststoffbett-Oberseite 18a ist ein Gradmesser für die Güte dieser Oberflächenreaktion und somit der Brenngaserzeugung. Dementspechend ist auch darauf zu achten, daß ein optimaler Höhenabstand H zwischen der Horizontalebene 22 und somit auch der in diesem Bereich ausgebildeten Reaktionsmittel-Einführzone 19 und der Oberseite 18a des Feststoffbettes 18 eingehalten wird. Diese Homogenität der Strömungs- und Wärmeverteilung im Bereich der Feststoffbett-Oberseite 18a ist somit gewissermaßen ein Gradmesser für die Güte der gewünschten Oberflächenreaktion. Es ist daher zweckmäßig, wenn der genannte Höhenabstand H, wie nachfolgend etwas näher erläutert wird, auf die günstigste Größe eingestellt werden kann. Bei einem bestimmten, zweckmäßig über einen Regelkreis geführten Höhenabstand (Vertikaldistanz) H zwischen der Festbettoberfläche (Oberseite 18a) und der Ebene des Vergasungsmitteleintritts (Horizontalebene 22) wird nämlich ein Optimum des Gesamtbildes aus Strömungs- und Temperaturfeld erreicht. Bei einem zu niedrigen Feststoffbett 18, d.h. bei zu großem Höhenabstand H ist die Turbulenz an der Feststoffbett-Oberseite 18a zu gering, wodurch sich der Stoff- und Wärmeübergang verschlechtert, wobei dieser negative Effekt noch durch die Isolationswirkung einer sich bildenden, stark rußhaltigen Gasschicht verstärkt wird. Dagegen wird bei zu hohem Feststoffbett 18, d.h. bei einem zu geringen Höhenabstand H die Ausbildung der gewünschten Strömungsform (Strömungsbild) dadurch verhindert, daß Brennstoff in unmittelbarer Nähe der Reaktionsmitteleintritte, also der Reaktionsmittel-Einführstutzten 20 gelangt und die eintretenden Reaktionsmittelstrahlen so ablenkt, daß nur noch Teilbereiche der Feststoffbett-Oberfläche aktiv mit dem Reaktionsmittel in Kontakt gebracht werden. Hierdurch wird der Umsatzgrad zwar an einigen Stellen, also lokal erhöht, insgesamt jedoch unerwünscht herabgesetzt. Es ist somit der bereits erwähnte vorbestimmte lichte Höhenabstand H, d.h. einerseits ein minimaler und andererseits ein maximaler Höhenabstand H, einzuhalten.

Was nun die Bauform des Vergasungsreaktors 9 anbelangt, so sei nochmals insbesondere auf die Fig.2 und 3 Bezug genommen. Darin - und zum Teil auch in Fig.1 - läßt sich erkennen, daß die Vergasungsmittel-Einführstutzen 20 an eine gemeinsame Ringleitung 23 angeschlossen sind, die den Vergasungsreaktor 9 bzw. - etwas genauer - dessen Reaktorschacht 9a umgibt und an die ihrerseits die bereits erläuterte Gaszuführleitung 13 für das Reaktionsmittel angeschlossen ist. Es sei an dieser Stelle noch erwähnt, daß das Reaktionsmittel bei der bisher erläuterten Ausführungsform von Anlage und Vergasungsreaktor 9 - aufgrund des Anlagenkonzepts - über die Einführstutzen 20 in die Einführzone 19 zwar im wesentlichen eingeblasen wird, dieses Einblasen jedoch noch durch Unterdruck im Reaktor 9 unterstützt werden kann (Kombination Unter- und Überdruck), oder daß dieses Einführen im wesentlichen durch Unterdruck bzw. Ansaugen geschehen kann.

Die bereits weiter oben erwähnte Reststoff-Austragsvorrichtung 17 des Vergasungsreaktors 9 kann in jeder geeigneten Weise, insbesondere als steuerbare mechanische Austragasvorrichtung ausgeführt sein. Wichtig ist dabei vor allem, daß diese Austragsvorrichtung 17 im Sinne einer Regelung des Höhenabstandes H zwischen der Oberseite 18a des Feststoffbettes 18 und der die Mündungsöffnungen 20a der Einführstutzen 20 enthaltenden Horizontalebene 22 in ihrer Austragsleistung steuerbar ist. Dazu verwendbare Meß- und Steuereinrichtungen sind aus der Praxis hinreichend bekannt, so daß sie hier nicht im einzelnen erläutert zu werden brauchen.

Von den den Vergasungsreaktor 9 durch die Austragsvorrichtung 17 nach unten verlassenden Reststoffen werden zweckmäßig zumindest die brennbaren Bestandteile wenigstens einer der Brennstellen bzw. Brennzonen der Anlage zugefördert. Dementsprechend ist unter der Reststoff-Austragsvorrichtung 17 ein Auslauftrichter 17a vorgesehen, der über wenigstens eine geeignete Fördereinrichtungen - wie in Fig.1 durch dicke gestrichelte Linien angedeutet - mit wenigstens einer Brennzone 2, 4 in Verbindung steht. In dem in Fig.1 veranschaulichten Ausführungsbeispiel der Anlage sind zwei Fördereinrichtungen 25 und 26 angedeutet, von denen die Fördereinrichtung 25 mit dem Hauptbrenner 6 der Sinterzone 4 in Verbindung steht, während die Fördereinrichtung 26 an den Calcinator 2, also an die Calcinierzone angeschlossen ist. Auf diese Weise kann über die Fördereinrichtung 25 im Bedarfsfalle wenigstens ein Teil des brennbaren Reststoffes in die Sinterzone des Drehrohrofens 3 und über die Fördereinrichtung 26 im Bedarfsfalle wenigstens ein Anteil des brennbaren Reststoffes in die Calcinierzone (Calcinator 2) gefördert werden. Dazu ist unterhalb des Auslauftrichters 17a zweckmäßig eine geeignete Aufteil- oder Verzweigungseinrichtung 27 vorgesehen.

Da die entgasten bzw. vergasten Abfallbrennstoffe am unteren Ende des Vergasungsreaktors 9, d.h. bei ihrem Austreten aus diesem Reaktor in Form von Reststoffen vorliegen, die noch einen Anteil brennbarer Reststoffe und einen Anteil nicht-brennbarer Reststoffe enthalten, ist es zweckmäßig, wenn die Reststoff-Austragsvorrichtung 17 nicht nur als einfache steuerbare Austragsvorrichtung, sondern gleichzeitig auch als Trenneinrichtung zum Abtrennen der nicht-brennbaren Reststoff-Bestandteile von den brennbaren Reststoffen ausgebildet ist. Dies kann beispielsweise dadurch geschehen, daß die nicht-brennbaren Reststoff-Bestandteile, z.B. Drähte (von Altreifen), Metallteile o.dgl., etwa im Bereich der Oberseite der Austragsvorrichtung 17 abgezogen werden, wobei dieser Austragsvorrichtung 17 dann zweckmäßig gesonderte Abfördermittel zugeordnet sind, wie sie in den Fig.1 und 2 durch dicke gestrichelte Linien 24 angedeutet sind. Diese Abfördermittel für die nicht-brennbaren Reststoff-Bestandteile sind zweckmäßig mit einer Nachbehandlungseinrichtung 28 verbunden, die ihrerseits über eine erste Abförderleitung 28a mit irgendeiner geeigneten Entsorgung und über eine zweite Abförderleitung 28b mit wenigstens einer Brennzone, beispielsweise der Sinterbrennzone 4 (über den Hauptbrenner 6) der Anlage in Verbindung steht. In dieser Nachbehandlungseinrichtung 28 können an den nicht-brennbaren Bestandteilen noch anhaftende brennbare oder auf sonstige Weise in der Brennanlage verwertbare Teile (z.B. Rußpartikel usw.) auf mechanische, themische und/oder chemische Weise entfernt werden, so daß lediglich die nicht bei der Zementklinkerherstellung verwertbaren Anteile über die Abförderleitung 28 entsorgt werden müssen, während die noch verwertbaren, brennbaren Teile über die zweite Abförderleitung 28b dem Hauptbrenner 6 und damit der Sinterbrennzone 4 zugeführt werden können. Letzteres kann zweckmäßig dadurch geschehen, daß die vom Auslauftrichter 17a zum Hauptbrenner 6 führende Fördereinrichtung 25 und die zweite Abförderleitung 28b der Nachbehandlungseinrichtung 28 - beispielsweise in einer gemeinsamen Fördereinrichtung 25' (Fig.1) - zusammengeführt und beide gemeinsam - in dieser Fördereinrichtung 25' - dem Hauptbrenner 6 der Brennzone zugeführt werden.

Es ist vielfach zweckmäßig, wenn die dem Hauptbrenner 6 zuzuführenden Reststoffe aus dem Vergasungsreaktor 9 noch auf eine geeignete Temperatur herabgekühlt werden können. Aus diesem Grunde kann es vorteilhaft sein, noch eine geeignete Kühleinrichtung, vorzugsweise einen indirekt wirkenden Kühler 29 (wie strichpunktiert in Fig.1 angedeutet) vorzusehen, über bzw. durch den die gemeinsame Fördereinrichtung 25', d.h. die Zusammenführung der Fördereinrichtung 25 von der Austragsvorrichtung 17 und die zweite Abförderleitung 28b der Nachbehandlungseinrichtung 28, geleitet werden, so daß die darin geförderten brennbaren Reststoffe zunächst noch entsprechend abgekühlt werden können, bevor sie dem Hauptbrenner 6 zugeführt werden.

Wie bereits weiter oben erwähnt worden ist, kann die erfindungsgemäße Anlage nicht nur in der zuvor anhand Fig.1 geschilderten Weise mit gesondert ausgebildeten und im Bereich zwischen dem Vorwärmer 1 und dem Drehrohrofenauslauf 3a angeordneten Calcinator 2 ausgeführt sein, sondern es ist sowohl anlagen- als auch verfahrenstechnisch ebensogut möglich, die Calcinierzone im ersten Längsabschnitt des Drehrohrofens 3 auszubilden und dementsprechend dann den Vorwärmer 1 bzw. die durch ihn gebildete Vorwärmzone unmittelbar vor dem Drehrohrofeneinlauf 3a anzuordnen. Diese an sich bekannte, gegenüber Fig.i etwas abgewandelte Auführungsform der Anlage ist ohne weiteres verständlich und braucht daher nicht gesondert zeichnerisch veranschaulicht zu werden. Bei dieser zweiten Ausführungsform (Calcinierzone am Anfang des Drehrohrofens) ist dann nur eine einzige Brennzone, nämlich die Sinterbrennzone 4 vorhanden, die vom Vergasungsreaktor 9 mit Brenngas (als Produktgas) versorgt werden muß. An der Ausbildung, Funktion und Wirkungsweise des erfindungsgemäß ausgebildeten und verwendeten Vergasungsreaktors 9 ändert sich dabei nichts.

Zusätzlich oder in Kombination mit zumindest einigen der oben beschriebenen Merkmale und Maßnahmen bestehen noch einige weitere Möglichkeiten für die Ausgestaltung der zuvor beschriebenen erfindungsgemäßen Anlage bzw. des damit durchzuführenden Verfahrens gemäß der Erfindung.

So ist es besonders zweckmäßig, wenn die Brenngaserzeugung im Vergasungsreaktor 9 unter reduzierenden Bedingungen durchgeführt wird, also bei unterstöchiometrischer Betriebsweise. Dabei wird dieser Reaktor 9 zweckmäßig mit einem geringen Unterdruck von wenigstens etwa 0,1 mbar betrieben.

Wie bereits weiter oben in konstruktiver Hinsicht - anhand der Fig.2 und 3 - erläutert worden ist, sind die Reduktionsmittel-Einführstutzen 20 so ausgerichtet, daß ihre Mittelachsen 20b jeweils unter einem spitzen Winkel (α bzw. β) von einer zum Schachtzentrum 9b gerichteten Bezugslinie 9c und/oder von der Horizontalebene 22 nach unten abweichen. Dementsprechend wird das Reaktionsmittel (Vergasungsmittel) in die Reaktionsmittel-Einführzone 19 des Reaktors 9 in Form von Impulsstrahlen eingeblasen, deren Strömungsrichtung unter den genannten spitzen Winkeln α bzw. β schräg verlaufend zur Reaktormitte bzw. nach unten ausgerichtet sind. Diese Impulsströme des dem Vergasungsreaktor 9 bzw. dessen Reaktionsmittel-Einführzone 19 zuzuführenden Reaktionsmittels und/oder des den Brennzonen (Calcinierzone 2 und Sinterbrennzone 4) vom Abgasreaktor 9 her zuzuführenden Brenngases werden zweckmäßig unter Einschaltung der oben erläuterten Gasfördereinrichtungen (Ventilatoren oder Injektoren 15) auf eine Strömungsgeschwindigkeit von mindestens 20 m/s, bezogen auf den Betriebszustand der Gase, eingestellt.

Der ebenfalls bereits weiter oben angesprochene Umsatzgrad bei der Reaktion bzw. Vergasung der Abfallbrennstoffe kann in günstiger Weise noch dadurch verbessert werden, daß in das gasförmige Reaktionsmittel Flüssigkeiten, insbesondere Wasser, eingeführt bzw. eingesprüht werden, um somit die Reaktionsgeschwindigkeit im Vergasungsrekator zu beschleunigen. Dieses Einsprühen von Flüssigkeiten kann beispielsweise im Bereich kurz vor dem Einblasen des Reaktionsmittels in die Einführzone 19 oder im Eintrittsbereich der Einführzone 19 innerhalb des Reaktors 9 geschehen.

Weiterhin kann es günstig sein, dem im Vergasungsreaktor 9 erzeugten Produktgas bzw. Brenngas ebenfalls Flüssigkeiten, bevorzugt Wasser, zuzuführen, um eventuelle Folgereaktionen mit in den Brenngasen enthaltenen Kohlenwasserstoffverbindungen und/oder Rußen zu unterstützen bzw. zu fördern.

Eine weitere Möglichkeit, den erwähnten Umsatzgrad des Abfallstoffes und damit den Vergasungseffekt zu erhöhen, kann dadurch erreicht werden, daß ein relativ kleiner Teilstrom des gasförmigen Reaktionsmittels in den unteren Bereich des Vergasungsreaktors 9 in das dortige Feststoffbett 18 eingeleitet wird. Diese Möglichkeit ist in Fig.1 am Vergasungsreaktor 9 durch eine strichpunktierte Pfeillinie 30 angedeutet. Dies bedeutet jedoch, daß in jedem Falle die weitaus größere Hauptmenge des gasförmigen Reaktionsmittels über die Leitung 13 und die Ringleitung 23 sowie die Einführstutzen 20 in den Reaktor 9, und zwar in die oberhalb der Festbett-Oberseite ausgebildete Reaktionsmittel-Einführzone 19 eingeführt, vorzugsweise eingeblasen wird.

## Patentansprüche

1. Anlage zur Herstellung von Zementklinker aus Zementrohmaterial (RM), mit einer Vorwärmzone (1), einer Calcinierzone (2), einer Sinterbrennzone (4) zum Fertigbrennen des Zementklinkers und einem Kühler (5) zum Abkühlen des heißen Zementklinkers mittels Kühlgas, wobei zumindest die in einem Brennofen (3) ausgebildete Sinterbrennzone (4) über einen Brenner (6) mit Brennstoff versorgt ist, sowie mit einem zur Erzeugung von Brenngas aus stückigen Abfallbrennstoffen (10), wie z.B. Altreifen, Holz u.dgl. ausgebildeten Vergasungsreaktor (9), an den einerseits wenigstens eine Gaszuführleitung (13) für ein gasförmiges Reaktionsmittel angeschlossen ist und der andererseits über wenigstens eine Brenngasleitung (14) mit wenigstens einer Brennzone (2, 4) in Verbindung steht,
**gekennzeichnet durch** folgende Merkmale:
a) im Vergasungsreaktor (9) ist im Bereich oberhalb eines Feststoffbettes (18) aus den Abfallbrennstoffen (10) eine sich über den Reaktorquerschnitt erstreckende Reaktionsmittel-Einführzone (19) ausgebildet, in die über den Reaktorumfang gleichmäßig verteilte Reaktionsmittel-Einführstutzen (20) einmünden,
b) der Brenngasleitung (14, 14a, 14b) ist wenigstens eine Gasfördereinrichtung (15) für die Zuführung des im Vergasungsreaktor (9) erzeugten Brenngases in wenigstens eine Brennzone (2, 4) zugeordnet.

2. Anlage nach Anspruch 1, **dadurch gekennzeichnet, daß** die Reaktionsmittel-Einführstutzen (20) im wesentlichen alle in derselben Horizontalebene (22) in die Reaktionsmittel-Einführzone (19) einmünden, wobei zur Ausbildung der Strömungsform in dieser Einführzone (19) die Mittelachse (20b) jedes Einführstutzens (20) unter jeweils einem spitzen Winkel (α bzw. β) von einer zum Zentrum (9b) des Reaktorquerschnitts gerichteten Bezugslinie (9c) und/oder von der Horizontalebene (22) nach unten abweicht.

3. Anlage nach Anspruch 1 oder 2, **dadurch gekennzeichnet, daß** die durch die Mündungsöffnungen (20a) der Reaktionsmittel-Einführstutzen (20) definierte Horizontalebene (22) im Vergasungsreaktor (9) einen vorbestimmten Höhenabstand (H) von der Oberseite (18a) des Feststoffbettes (18) aufweist.

4. Anlage nach Anspruch 1, **dadurch gekennzeichnet, daß** die Vergasungsmittel-Einführstutzen (20) an eine gemeinsame, den Vergasungsreaktor (9) umgebende Ringleitung (23) angeschlossen sind, an die ihrerseits die mit einer Gasfördereinrichtung (15) versehene Gaszuführleitung (13) für das Vergasungsmittel angeschlossen ist.

5. Anlage nach Anspruch 4, **dadurch gekennzeichnet, daß** die Gaszuführleitung (13) durch eine sauerstoffhaltige Kühlerabluft fördernde Kühlerabluftleitung (13a) und/oder durch eine sauerstoffhaltige Luft fördernde Frischluftleitung (13b) gebildet wird.

6. Anlage nach den Ansprüchen 1 und 4, **dadurch gekennzeichnet, daß** in der Gaszuführleitung (13) zum Vergasungsreaktor (9) und in der Brenngasleitung (14) als Gasfördereinrichtungen (15) Ventilatoren und/oder mittels Druckgas oder Dampf betriebene Injektoren vorgesehen sind.

7. Anlage nach Anspruch 6, **dadurch gekennzeichnet, daß** den Gaszuführ- und Brenngasleitungen (13a, 13b, 14a, 14b) und/oder den Gasfördereinrichtungen (15) Mittel (16) zum Messen und Regeln der Reaktions- und Brenngase zugeordnet sind.

8. Anlage nach wenigstens einem der vorhergehenden Ansprüche, **dadurch gekennzeichnet, daß** der Vergasungsreaktor (9) in Form eines im wesentlichen vertikalen Reaktionsschachtes (9a) mit einer oberen Aufgabeschleuse (12) für den Abfallbrennstoff (10) und einer im Bodenbereich vorgesehenen Austragsvorrichtung (17) für nicht vollständig vergaste Reststoffe ausgebildet ist und einen runden - vorzugsweise kreis-oder ellipsenförmigen (Fig.3 und 4) - oder einen polygonalen (Fig.5 und 6) Querschnitt aufweist.

9. Anlage nach Anspruch 8, **dadurch gekennzeichnet, daß** die Aufgabeschleuse (12) für den Abfallbrennstoff (10) durch eine Rotationsschleuse oder eine Pendelklappenschleuse gebildet wird.

10. Anlage nach Anspruch 8, **dadurch gekennzeichnet, daß** die Austragsvorrichtung (17) im Sinne einer Regelung des Höhenabstandes (H) zwischen der Oberseite (18a) des Feststoffbettes (18) und der die Mündungsöffnungen (20a) der Einführstutzen (20) enthaltenden Horizontalebene (22) in ihrer Austragsleistung steuerbar ist.

11. Anlage nach Anspruch 8, **dadurch gekennzeichnet, daß** unter der Reststoff-Austragsvorrichtung (17) ein Auslauftrichter (17a) vorgesehen ist, der über wenigstens eine Fördereinrichtung (25, 26) mit wenigstens einer Brennzone (2, 4) in Verbindung steht.

12. Anlage nach Anspruch 8, **dadurch gekennzeichnet, daß** die Reststoff-Austragsvorrichtung (17) gleichzeitig als Trenneinrichtung zum Abtrennen nicht-brennbarer Reststoff-Bestandteile ausgebildet ist, wobei der Austragsvorrichtung (17) gesonderte Abfördermittel (24) zugeordnet sind, die mit einer Nachbehandlungseinrichtung (28) verbunden sind, die ihrerseits über eine erste Abförderleitung (28a) mit einer Entsorgung und über eine zweite Abförderleitung (28b) mit der Sinterbrennzone (4) der Anlage in Verbindung steht.

13. Anlage nach Anspruch 12, **dadurch gekennzeichnet, daß** eine vom Auslauftrichter (17a) ausgehende Fördereinrichtung (25) und die zweite Abförderleitung (28b) der Nachbehandlungseinrichtung (28) zusammengeführt und beide gemeinsam dem Brenner (6) der Sinterzone (4) zugeführt sind.

14. Anlage nach Anspruch 13, **dadurch gekennzeichnet, daß** die Fördereinrichtung (25) der Austragsvorrichtung (17) und die zweite Förderleitung (28b) der Nachbehandlungseinrichtung (28) vor dem Brenner (6) gemeinsam über eine Kühleinrichtung, vorzugsweise über einen indirekt wirkenden Kühler (29), zum Abkühlen der Reststoffe geführt sind.

15. Anlage nach wenigstens einem der vorhergehenden Ansprüche, **gekennzeichnet durch** die - in Fließrichtung des Zementrohmateriales (RM) betrachtet - aufeinanderfolgende Anordnung eines die Vorwärmzone bildenden Vorwärmers (1), eines die Calcinierzone bildenden, gesondert angeordneten und mit Brennstoff versorgten Calcinators (2), eines den Brennofen bildenden Drehrohrofens (3) sowie eines die Kühlzone bildenden Kühlers (5), wobei der Vergasungsreaktor (9) einerseits über die heiße Kühlerabluft als Reaktionsmittel heranführende Gaszuführleitung (13, 13a) mit dem Kühler (5) und andererseits über die verzweigte Brenngasleitung (14, 14a, 14b) sowohl mit dem Calcinator (2) als auch mit der Sinterbrennzone (4) in Verbindung steht und wobei in den Zweigleitungen (14a, 14b) der Brenngasleitung (14) Regeleinrichtungen (16) in der Weise vorgesehen sind, daß das im Vergasungsreäktor (9) erzeugte Brenngas wahlweise dem Calcinator (2) oder der Sinterbrennzone (4) oder in einstellbaren Teilmengen dem Calcinator und der Sinterbrennzone zuführbar ist.

16. Anlage nach wenigstens einem der Ansprüche 1 bis 14, **dadurch gekennzeichnet, daß** die Calcinierzone in einem ersten Längsabschnitt des als Drehrohrofen (3) ausgeführten Brennofens ausgebildet ist und die Brenngasleitung vom Vergasungsreaktor (9) nur an den der Sinterzone (4) des Drehrohrofens (3) zugeordneten Hauptbrenner (6) angeschlossen ist.

17. Verfahren zur Herstellung von Zementklinker aus Zementrohmaterial, wobei das Zementrohmaterial (RM) zunächst in einer Vorwärmzone (1) vorgewärmt, anschließend in einer Calcinierzone (2) calciniert und danach in einer Sinterbrennzone (4) unter Zuführung von Brennstoff zu Zementklinker fertiggebrannt wird, woraufhin der heiße Zementklinker in einer Kühlzone (5) mit Hilfe von Kühlgas abgekühlt wird, und wobei in einem Vergasungsreaktor (9) aus stückigen Abfallbrennstoffen (10), wie z.B. Altreifen, Holz u.dgl., unter Zuführung eines gasförmigen Reaktionsmittels ein Brenngas erzeugt wird, das in wenigstens einer Brennzone (2, 4) als Brennstoff ausgenutzt wird,
**dadurch gekennzeichnet,**
**dass** in den Vergasungsreaktor (9) oberhalb eines Feststoffbettes (18) aus den Abfallbrennstoffen (10) das heiße, gasförmige Reaktionsmittel (21) an mehreren über den Reaktorumfang verteilten Zuführstellen (20, 20a) unter Ausbildung einer sich über den Reaktorquerschnitt erstreckenden Reaktionsmittel-Einführzone (19) mit einer Strömungsgeschwindigkeit von mindestens 20 m/s und mit einer vorgewählten Strömungsform eingeführt und das im Vergasungsreaktor (9) erzeugte Brenngas als Brennstoff der Brennzone (2, 4) zugeführt wird.

18. Verfahren nach Anspruch 17, **dadurch gekennzeichnet, daß** die Brenngaserzeugung im Vergasungsreaktor (9) unter reduzierenden Bedingungen durchgeführt und dieser Reaktor (9) dabei mit einem Unterdruck von wenigstens 0,1 mbar betrieben wird.

19. Verfahren nach Anspruch 17, **dadurch gekennzeichnet, dass** das Reaktionsmittel in die Reaktionsmittel-Einführzone (19) in Form von. Teilströmen eingeführt wird, deren Einströmrichtung unter Ausbildung einer Rotationsströmung in bezug auf die durch die Einführstellen (20, 20a) definierte Horizontalebene (22) mit jeweils spitzem Winkel (α, β) von einer zum Zentrum des Reaktorquerschnitts gerichteten Bezugslinie und/oder von der Horizontalen (22) nach unten abweicht.

20. Verfahren nach Anspruch 17 oder 19, **dadurch gekennzeichnet, daß** die Impulsströme des den Vergasungsreaktor (9) zuzuführenden gasförmigen Reaktionsmittels (21) und/oder des wenigstens einer Brennzone (2, 4) vom Vergasungsreaktor (9) zuzuführenden Brenngases unter Einschaltung von Gasfördereinrichtungen (15) auf eine Strömungsgeschwindigkeit von mindestens 20 m/s bezogen auf den Betriebszustand der Gase, eingestellt werden.

21. Verfahren nach Anspruch 17, **dadurch gekennzeichnet, daß** in das gasförmige Reaktionsmittel die Reaktionsgeschwindigkeit im Vergasungsreaktor (9) beschleunigende Flüssigkeiten eingesprüht werden.

22. Verfahren nach Anspruch 17, **dadurch gekennzeichnet, daß** dem im Vergasungsreaktor (9) erzeugten Brenngas Flüssigkeiten zur Förderung von Folgereaktionen mit im Brenngas enthaltenen Kohlenwasserstoff-Verbindungen und/oder Rußen zugeführt werden.

23. Verfahren nach Anspruch 17, **dadurch gekennzeichnet, dass** zur Erhöhung des Umsatzgrades des Abfallbrennstoffes ein Teilstrom (30) des gasförmigen Reaktionsmittels in den unteren Bereich des Vergasungsreaktors (9) in das dortige Feststoffbett (18) eingeleitet wird.

24. Verfahren nach Anspruch 17, **dadurch gekennzeichnet, daß** zumindest von den brennbaren Bestandteilen der den Vergasungsreaktor (9) verlassenden Reststoffe ein Anteil wenigstens einer Brennzone (2, 4) zugeführt wird.

25. Verfahren nach Anspruch 24, **dadurch gekennzeichnet, daß** die Reststoffe nach dem Vergasungsreaktor (9) zumindest in brennbare Bestandteile und nicht-brennbare Bestandteile, wie z.B. metallische Rückstände, separiert werden.

26. Verfahren nach Anspruch 25, **dadurch gekennzeichnet, daß** wenigstens ein Teil der den Vergasungsreaktor (9) verlassenden Reststoffe abgekühlt wird.

## Claims

1. Plant for the production of cement clinker from cement raw material (RM), having a preheating zone (1), a calcination zone (2), a sintering combustion zone (4) for final burning of the cement clinker and a cooler (5) for cooling of the hot cement clinker by means of cooling gas, wherein at least the sintering combustion zone (4) formed in a kiln (3) is supplied with fuel *via* a burner (6), and having a gasification reactor (9) which is constructed to generate fuel gas from lumpy waste product fuels (10), such as, for example, used tyres, wood and the like, to which on the one hand at least one gas supply line (13) for a gaseous reactant is connected and which on the other hand is connected *via* at least one fuel gas line (14) to at least one combustion zone (2, 4),
**characterised by** the following features:
a) in the gasification reactor (9) there is constructed in the region above a solids bed (18) made up of the waste product fuels (10) a reactant introduction zone (19) which extends over the reactor cross-section and into which reactant introduction fittings (20), which are evenly distributed over the periphery of the reactor, open,
b) the fuel gas line (14, 14a, 14b) has associated with it at least one gas-conveying device (15) for feeding the fuel gas generated in the gasification reactor (9) into at least one combustion zone (2, 4).

2. Plant according to claim 1, **characterised in that** substantially all of the reactant introduction fittings (20) open into the reactant introduction zone (19) in the same horizontal plane (22), wherein for the formation of the flow shape **in that** introduction zone (19) the central axis (20b) of each introduction fitting (20) diverges downwards at an acute angle (α or β) from a reference line (9c), pointing to the centre (9b) of the reactor cross-section, and/or from the horizontal plane (22).

3. Plant according to claim 1 or 2, **characterised in that** the horizontal plane (22) in the gasification reactor (9) defined by the outlet orifices (20a) of the reactant introduction fittings (20) is at a predetermined vertical distance (H) from the upper side (18a) of the solids bed (18).

4. Plant according to claim 1, **characterised in that** the gasification agent introduction fittings (20) are connected to a common ring line (23) which surrounds the gasification reactor (9) and to which the gas supply line (13), provided with a gas-conveying device (15), for the gasification agent is in turn connected.

5. Plant according to claim 4, **characterised in that** the gas supply line (13) is formed by a cooler exhaust air line (13a) conveying oxygen-containing exhaust air from the cooler and/or by a fresh air line (13b) conveying oxygen-containing air.

6. Plant according to claims 1 and 4, **characterised in that** fans and/or injectors operated by means of compressed gas or by steam are provided as gas-conveying devices (15) in the gas supply line (13) to the gasification reactor (9) and in the fuel gas line (14).

7. Plant according to claim 6, **characterised in that** means (16) for measuring and regulating the reaction gases and fuel gases are associated with the gas supply lines and fuel gas lines (13a, 13b, 14a, 14b) and/or with the gas-conveying devices (15).

8. Plant according to at least one of the preceding claims, **characterised in that** the gasification reactor (9) is constructed in the form of a substantially vertical reaction shaft (9a) having an upper feed gate (12) for the waste product fuel (10) and a discharge device (17), provided in the base region, for incompletely gasified residues and has a round - preferably circular or elliptical - cross-section (Figs. 3 and 4) or a polygonal cross-section (Figs. 5 and 6).

9. Plant according to claim 8, **characterised in that** the feed gate (12) for the waste product fuel (10) is formed by a rotary gate or a flap gate valve.

10. Plant according to claim 8, **characterised in that** the discharge device (17) is controllable in its discharge capacity with a view to regulating the vertical distance (H) between the upper side (18a) of the solids bed (18) and the horizontal plane (22) containing the outlet orifices (20a) of the introduction fittings (20).

11. Plant according to claim 8, **characterised in that** an outlet hopper (17a) is provided below the residue discharge device (17), which outlet hopper (17a) is connected to at least one combustion zone (2, 4) *via* at least one conveying device (25, 26).

12. Plant according to claim 8, **characterised in that** the residue discharge device (17) is simultaneously constructed as a separating device for separating off non-combustible residue constituents, wherein the discharge device (17) has associated with it separate removal means (24) which are connected to an after-treatment device (28) which for its part is connected *via* a first removal line (28a) to a disposal means and *via* a second removal line (28b) to the sintering combustion zone (4) of the plant.

13. Plant according to claim 12, **characterised in that** a conveying device (25) running from the outlet hopper (17a) and the second removal line (28b) of the after-treatment device (28) are brought together and both are led jointly to the burner (6) of the sintering zone (4).

14. Plant according to claim 13, **characterised in that** the conveying device (25) of the discharge device (17) and the second conveying line (28b) of the after-treatment device (28) are led jointly, before the burner (6), *via* a cooling device, preferably *via* an indirectly acting cooler (29), for cooling of the residues.

15. Plant according to at least one of the preceding claims, **characterised by** the successive arrangement - viewed in the direction of flow of the cement raw material (RM) - of a preheater (1) forming the preheating zone, a separately disposed calciner (2) supplied with fuel and forming the calcination zone, a rotary kiln (3) forming the kiln and a cooler (5) forming the cooling zone, wherein the gasification reactor (9) is on the one hand connected to the cooler (5) *via* the gas supply line (13, 13a) bringing the hot cooler exhaust air as reactant and on the other hand is connected *via* the branched fuel gas line (14, 14a, 14b) both to the calciner (2) and to the sintering combustion zone (4), and wherein regulating devices (16) are provided in the branch lines (14a, 14b) of the fuel gas line (14) in such a manner that the fuel gas generated in the gasification reactor (9) can be supplied selectively to the calciner (2) or to the sintering combustion zone (4) or in adjustable proportions to the calciner and the sintering combustion zone.

16. Plant according to at least one of claims 1 to 14, **characterised in that** the calcination zone is constructed in a first longitudinal portion of the kiln constructed as a rotary kiln (3) and the fuel gas line from the gasification reactor (9) is connected only to the main burner (6) associated with the sintering zone (4) of the rotary kiln (3).

17. Method for the production of cement clinker from cement raw material, wherein the cement raw material (RM) is first of all preheated in a preheating zone (1), then calcined in a calcination zone (2) and afterwards finally burnt to cement clinker in a sintering combustion zone (4) with fuel being supplied, whereupon the hot cement clinker is cooled in a cooling zone (5) with the aid of cooling gas, and wherein in a gasification reactor (9) a fuel gas is generated from lumpy waste product fuels (10), such as, for example, used tyres, wood and the like, with a gaseous reactant being supplied, which fuel gas is utilised as fuel in at least one combustion zone (2, 4), **characterised in that** the hot gaseous reactant (21) is introduced into the gasification reactor (9) above a solids bed (18) made up of the waste product fuels (10) at a plurality of supply sites (20, 20a) distributed over the periphery of the reactor, forming a reactant introduction zone (19) which extends over the reactor cross-section, at a flow rate of at least 20 m/s and with a pre-selected flow shape, and the fuel gas generated in the gasification reactor (9) is supplied as fuel to the combustion zone (2, 4).

18. Method according to claim 17, **characterised in that** the fuel gas generation in the gasification reactor (9) is carried out under reducing conditions and that reactor (9) is operated in that process with a negative pressure of at least 0.1 mbar.

19. Method according to claim 17, **characterised in that** the reactant is introduced into the reactant introduction zone (19) in the form of partial streams the inflow direction of which in each case diverges downwards at an acute angle (α, β) from a reference line pointing to the centre of the reactor and/or from the horizontal (22), forming a rotational flow with respect to the horizontal plane (22) defined by the introduction sites (20, 20a).

20. Method according to claim 17 or 19, **characterised in that** the pulsed streams of the gaseous reactant (21) to be supplied to the gasification reactor (9) and/or of the fuel gas to be supplied from the gasification reactor (9) to at least one combustion zone (2, 4) are set to a flow rate of at least 20 m/s, based on the operating state of the gases, with gas-conveying devices (15) being interposed.

21. Method according to claim 17, **characterised in that** fluids that accelerate the rate of reaction in the gasification reactor (9) are sprayed into the gaseous reactant.

22. Method according to claim 17, **characterised in that** fluids that promote subsequent reactions with hydrocarbon compounds and/or soots contained in the fuel gas are supplied to the fuel gas generated in the gasification reactor (9).

23. Method according to claim 17, **characterised in that**, in order to increase the conversion efficiency of the waste product fuel, a partial stream (30) of the gaseous reactant is introduced into the solids bed (18) in the lower region of the gasification reactor (9).

24. Method according to claim 17, **characterised in that** at least a proportion of the combustible constituents of the residues leaving the gasification reactor (9) is delivered to at least one combustion zone (2, 4).

25. Method according to claim 24, **characterised in that** after the gasification reactor (9) the residues are separated at least into combustible constituents and non-combustible constituents, such as, for example, metallic residues.

26. Method according to claim 25, **characterised in that** at least a portion of the residues leaving the gasification reactor (9) is cooled.

## Revendications

1. Installation pour la fabrication de clinker à partir de matériau brut de ciment (RM) comprenant une zone de préchauffage (1), une zone de calcination (2), une zone de combustion de frittage (4) pour la combustion de finissage du clinker et un refroidisseur (5) pour le refroidissement du clinker chaud au moyen de gaz de refroidissement, au moins la zone de combustion de frittage (4) réalisée dans son four de combustion (3) étant alimenté au moyen d'un brûleur (6) en combustible, et un réacteur de gazéification (9) réalisé pour produire du gaz combustible à partir de combustibles de déchet (10) en morceaux, comme par exemple des pneus usagés, du bois, etc., réacteur auquel est raccordé d'une part au moins une conduite d'arrivée de gaz (13) pour un agent réactif gazeux et qui est en liaison d'autre part par au moins une conduite de gaz combustible (14) avec au moins une zone de combustion (2, 4),
**caractérisée par** les caractéristiques suivantes :
a) dans le réacteur de gazéification (9) est réalisée dans la zone au-dessus d'un lit de matière solide (18) à base des combustibles de déchet (10) une zone d'introduction d'agent réactif (19) s'étendant sur la section du réacteur, dans laquelle débouchent des tubulures d'introduction d'agent réaction (20) uniformément réparties sur le pourtour du réacteur,
b) à la conduite de gaz combustible (14, 14a, 14b) est attribué au moins un dispositif de transport de gaz (15) pour l'arrivée du gaz combustible généré dans le réacteur de gazéification (9) dans au moins une zone de combustion (2, 4).

2. Installation selon la revendication 1, **caractérisée en que** les tubulures d'introduction d'agent réactif (20) débouchent essentiellement toutes dans le même plan horizontal (22) dans la zone d'introduction d'agent réactif (19), l'axe médian (20b) de chaque tubulure d'introduction (20) s'écartant en formant un angle aigu (α ou β) d'une ligne de référence (9c) orientée vers le centre (9b) de la section du réacteur et/ou du plan horizontal (22) vers le bas, et ce pour former la forme d'écoulement dans cette zone d' introduction (19).

3. Installation selon la revendication 1 ou 2, **caractérisée en ce que** le plan horizontal (22) défini par les ouvertures de débouché (20a) des tubulures d'introduction d'agent réactif (20) présente dans le réacteur de gazéification (9) une distance en hauteur (H) prédéfinie au côté supérieur (18a) du lit de matière solide (18).

4. Installation selon la revendication 1, **caractérisée en ce que** les tubulures d'introduction d'agent gazéifiant (20) sont raccordées à une bague annulaire (23) commune, entourant le réacteur de gazéification (9), conduite à laquelle est raccordée pour sa part la conduite d'arrivée de gaz (13) dotée d'un dispositif de transport de gaz (15) pour l'agent gazéifiant.

5. Installation selon la revendication 4, **caractérisée en ce que** la conduite d'arrivée de gaz (13) est formée par une conduite d'air sortant du refroidisseur (13a) transportant de l'air sortant du refroidisseur contenant de l'oxygène et/ou par une conduite d'air frais (13b) transportant de l'air contenant de l'oxygène.

6. Installation selon les revendications 1 à 4, **caractérisée en ce que** dans la conduite d'arrivée de gaz (13) au réacteur de gazéification (9) et dans la conduite de gaz combustible (14) sont prévus comme dispositifs de transport de gaz (15) des ventilateurs et/ou des injecteurs exploités au moyen de gaz comprimé ou de vapeur.

7. Installation selon la revendication 6, **caractérisée en ce que** des moyens (16) pour mesurer et régler les gaz de réaction et les gaz combustibles sont attribués aux conduites d'arrivée de gaz et de gaz combustibles (13a, 13b, 14a, 14b) et/ou aux dispositifs de transport de gaz (15).

8. Installation selon au moins l'une quelconque des revendications précédentes, **caractérisée en ce que** le réacteur de gazéification (9) est réalisé sous la forme d'un puits de réaction (9a) sensiblement vertical avec un sas d'alimentation (12) supérieur pour le combustible de déchet (10) et un dispositif de sortie (17) prévu dans la zone du fond pour des produits résiduels complètement gazéifiés et présente une section ronde - de préférence circulaire ou en forme d'ellipse (figures 3 et 4) - ou une section polygonale (figures 5 et 6).

9. Installation selon la revendication 8, **caractérisée en ce que** le sas d'alimentation (12) pour le combustible de déchet (10) est formé par un sas de rotation ou un sas à clapet oscillant.

10. Installation selon la revendication 8, **caractérisée en ce que** le dispositif de sortie (17) peut être commandé dans sa puissance de sortie dans le sens d'un réglage de la distance de hauteur (H) entre le côté supérieur (18a) du lit de matière solide (18) et le plan horizontal (22) contenant les ouvertures de débouché (20a) des tubulures d'introduction (20).

11. Installation selon la revendication 8, **caractérisée en ce que** sous le dispositif de sortie de produit résiduel (17) est prévu un entonnoir d'évacuation (17a) qui est en liaison par au moins un dispositif de transport (25, 26) avec au moins une zone de combustion (2, 4).

12. Installation selon la revendication 8, **caractérisée en ce que** le dispositif de sortie de produit résiduel (17) est réalisé en même temps qu'un dispositif de séparation pour la séparation de composants de produit résiduel non combustibles, des moyens d'évacuation (24) séparés étant attribués au dispositif de sortie (17), lesquels moyens sont reliés à un dispositif de traitement ultérieur (28), qui pour sa part est en liaison par une première conduite de transport (28a) avec une évacuation et par une seconde conduite de transport (28b) avec la zone de combustion de frittage (4) de l'installation.

13. Installation selon la revendication 12, **caractérisée en ce qu'**un dispositif de transport (25) sortant de l'entonnoir de sortie (17a) et la seconde conduite de transport (28b) du dispositif de traitement complémentaire (28) sont guidés ensemble et sont amenés tous deux en commun au brûleur (6) de la zone de frittage (4).

14. Installation selon la revendication 13, **caractérisée en ce que** le dispositif de transport (25) du dispositif de sortie (17) et la seconde conduite de transport (28b) du dispositif de traitement complémentaire (28) sont guidés avant le brûleur (6) conjointement au moyen d'un dispositif de refroidissement, de préférence au moyen d'un refroidisseur (29) agissant de façon directe, pour le refroidissement des produits résiduels.

15. Installation selon au moins l'une quelconque des revendications précédentes, **caractérisée par** l'agencement consécutif, dans le sens d'écoulement du matériau brut de ciment (RM), d'un réchauffeur (1) formant la zone de préchauffage, d'un calcinateur (2) formant la zone de calcination est disposé séparément et alimenté en combustible, d'un four tubulaire tournant (3) formant le four de combustion et d'un refroidisseur (5) formant la zone de refroidissement, le réacteur de gazéification (9) étant en liaison d'une part par la conduite d'arrivée de gaz (13, 13a) amenant de l'air évacué du refroidisseur chaud comme agent réactif avec le refroidisseur (5) et d'autre part par la conduite de gaz combustible (14, 14a, 14b) ramifiée aussi bien avec le calcinateur (2) qu'avec la zone de combustion de frittage (4) et des dispositifs de réglage (16) étant prévus dans les conduites de branche (14a, 14b) de la conduite de gaz combustible (14) en ce sens que le gaz combustible généré dans le réacteur de gazéification (9) peut être amené au choix au calcinateur (2) ou à la zone de combustion de frittage (4) ou dans des quantités partielles réglables au calcinateur et à la zone de combustion de frittage.

16. Installation selon au moins l'une quelconque des revendications 1 à 14, **caractérisée en ce que** la zone de calcination est réalisée dans une première partie longitudinale du four de cuisson réalisé comme four tubulaire rotatif (3) et la conduite de gaz combustible provenant du réacteur de gazéification (9) est raccordée seulement au brûleur principal (6) attribué seulement à la zone de frittage (4) du four tubulaire rotatif (3).

17. Procédé pour fabriquer du clinker à partir de matériau brut de ciment, le matériau brut de ciment (RM) étant préchauffé d'abord dans une zone de préchauffage (1) et calciné ensuite dans une zone de calcination (2) et brûlé ensuite pour finir dans une zone de combustion de frittage (4) en amenant du combustible au clinker, après quoi le clinker chaud est refroidi dans une zone de refroidissement (5) avec du gaz de refroidissement, et un gaz combustible, qui est utilisé dans au moins une zone de combustion (2, 4) comme combustible, étant généré dans un réacteur de gazéification (9) à partir de combustibles de déchet (10) en morceaux, comme par exemple des pneus usagés, du bois, etc., en amenant un agent réactif gazeux, lequel est utilisé dans au moins une zone (2, 4) comme combustible,
**caractérisée en ce que**
l'agent réactif (21) chaud et gazeux est introduit dans le réacteur de gazéification (9) au-dessus d'un lit de matière solide (18) à base des combustibles de déchet (10) en plusieurs endroits d'arrivée (20, 20a) répartis sur le pourtour du réacteur en formant une zone d'introduction d'agent réactif (19) s'étendant sur la section du réacteur avec une vitesse d'écoulement d'au moins 20 m/s et avec une forme d'écoulement présélectionnée et le gaz combustible généré dans le réacteur de gazéification (9) est amené comme combustible à la zone de combustion (2, 4).

18. Procédé selon la revendication 17, **caractérisé en ce que** la production de gaz combustible dans le réacteur de gazéification (9) est effectuée dans des conditions de réduction et ce réacteur (9) est exploité alors avec une dépression d'au moins 0,1 mbar.

19. Procédé selon la revendication 17, **caractérisé en ce que** l'agent réactif est introduit dans la zone d'influence d'agent réactif (19) sous la forme de flux partiels, dont le sens d'entrée s'écarte d'une ligne de référence dirigée vers le centre de la section du réacteur et/ou de l'horizontale (22) vers le bas en formant un écoulement de rotation par rapport au plan horizontal (22) défini par les endroits d'introduction (20, 20a) en formant à chaque fois un angle (α, β) aigu.

20. Procédé selon la revendication 17 ou 19,
**caractérisé en ce que** les flux d'impulsion de l'agent réactif (21) gazeux, à amener au réacteur de gazéification (9) et/ou de gaz combustible à amener à au moins une zone de combustion (2, 4) du réacteur de gazéification (9) avec l'intervention de dispositifs de transport de gaz (15) sont réglés sur une vitesse d'écoulement d'au moins 20 m/s par rapport à l'état de service des gaz.

21. Procédé selon la revendication 17, **caractérisé en ce que** des liquides accélérant la vitesse de réaction dans le réacteur de gazéification (9) sont injectés dans le réactif gazeux.

22. Procédé selon la revendication 17, **caractérisé en ce que** des liquides destinés à favoriser les réactions consécutives sont amenés avec des composés d'hydrocarbure et/ou des suies contenues dans le gaz de combustion au gaz combustible généré dans le réacteur de gazéification (9).

23. Procédé selon la revendication 17, **caractérisé en ce que**, pour améliorer le degré de transformation du combustible de déchet, un flux partiel (30) de l'agent réactif gazeux est introduit dans la zone inférieure du réacteur de gazéification (9) dans le lit de matière solide (18) placé à cet endroit.

24. Procédé selon la revendication 17, **caractérisé en ce que**, au moins parmi les constituants combustibles des produits résiduels quittant le réacteur de gazéification (9), une fraction est amenée à au moins une zone de combustion (2, 4).

25. Procédé selon la revendication 24, **caractérisé en ce que** les produits résiduels sont séparés après le réacteur de gazéification (9) au moins en composants combustibles et en composants non combustibles, comme par exemple des résidus métalliques.

26. Procédé selon la revendication 25, **caractérisé en ce qu'**au moins une partie des produits résiduels quittant le réacteur de gazéification (9) est refroidie.
